# EUROPEAN PATENT APPLICATION

(11) **EP 1 188 382 A1**
(43) Date of publication of application: **20.03.2002**
(21) Application number: 00120086.4
(22) Date of filing: 15.09.2000
(51) Int. Cl.: A23K 1/00, A01K 5/00

(54) **Improvements in or relating to the production of animal feed**

(71) Applicant: AVENTIS ANIMAL NUTRITION S.A., 92164 Antony Cedex (FR)
(72) Inventor: D'Alfonso, Thomas, 92330 Sceaux (FR)
(74) Representative: Mérigeault, Shona

(57) **Abstract**

A method for selectively enhancing animal feed by the addition of feed supplements to raw materials in accordance with a determination of the improvement in homogeneity of the physiological response of animals fed with the feedstuff. Batches of raw material for the feedstuff which have a nutritional value below a threshold are supplemented with a feed supplement, whereas batches already high in nutritional value are not supplemented. This reduces the variance in nutritional value of the feedstuff, and improves homogeneity in the physiological response of the animals to the feedstuff. The nutritional value is measured in terms of the amino acid content, and the feed supplement is an enzyme which improves the digestibility of the amino acid.

## Description

The present invention relates to the production of animal feed and in particular to the use of feed supplements in manufacturing animal feed from raw materials.

Animal feeds typically consist of a mixture of materials. For instance a typical feed for poultry is a mix of wheat, barley and oats, though the ingredients can vary, for instance to use soya bean meal or corn, and the ingredients and amounts vary for different animals. Typically such mixed feeds are supplemented by the addition of feed supplements which enhance the feed. For instance, an enzyme, which may be synthetic, can be added to improve the digestibility of amino acid in the feed. Other types of feed supplement are known to have this effect. Such feed supplements can reduce the effects of natural variability in the raw materials from which the feed is made or reduce the variability of digestion within the animal. Further, they can reduce the overall cost of the feedstuff by reducing the amount of high cost ingredient which needs to be included. For instance, if the digestibility of an amino acid derived from wheat is enhanced, then less wheat needs to be included in the mix.

Typically, mixed feeds are «over-formulated» in order that some aspect of the nutritional value of the feed can be guaranteed despite the natural variability in the raw materials. However, such over-formulation is uneconomic and can result in environmental pollution, for instance as a result of excess protein content in the feed.

An important aspect of improving the feedstuff is in improving the nature of the final product, for instance in the case of poultry, the final product may be eggs or meat. While improving the quality of the final product is important, another important consideration is the consistency of the final product. For instance, improved homogeneity of egg size means that more eggs will fall into the categories of highest value (such as Grade A Large) which increases the profitability of the poultry flock. As another example, improved flock homogeneity in meat-type chickens will improve homogeneity when the meat is processed, thus reducing the number of cases which are out of specification ranges. Similar effects will occur with other animals, such as cattle (for milk or for meat production), sheep (for meat or wool production) or pigs.

Thus, according to the present invention there is provided a method of formulating an animal feed comprising the steps of:
(a) analysing the effect of variation in nutritional value of an animal feedstuff on the homogeneity of the physiological response of animals fed with the feedstuff;
(b) analysing the effect on the variation in nutritional value of the addition of a feed supplement;
(c) analysing the effect on the cost of the feedstuff of the addition of the feed supplement; and
(d) determining the amount of feed supplement to be added to the feedstuff on the basis of the effect on said homogeneity, of said variation in nutritional value, and of the cost of the feedstuff.

The present invention provides for improved homogeneity in the performance of an animal population by selectively supplementing a feedstuff for the animal. In particular, it concerns the selective supplementation of ingredients for a feedstuff on the basis of analysis of: the variation in the performance of the animals, and that part of the variation which is due to diet, the variation in the ingredients forming the animal feed and the cost of supplementing them.

The invention, therefore, allows one to analyse the cost of feed supplemented by a particular feed supplement compared with the increased value of the final product resulting from improved homogeneity in the physiological response of the animals in order to formulate a diet with maximum profit One result of the analysis may be the determination of whether a particular batch of feed should be supplemented by a particular feed supplement. Present feed formulation systems only maximise the cost of the diet with respect to predetermined nutrient requirements and do not consider the homogeneity of performance as a criteria.

The step of analysing the effect of addition of the feed supplement on the homogeneity of the physiological response may comprise analysing the relationship between the digestibility of a nutritional component of the animal feedstuff, and the homogeneity of the physical response of animals fed with the feedstuff. The effect of the feed supplement on the digestibility of the nutritional component may also be analysed.

The nutritional component may be an amino acid and the digestibility may be measured as one of: the true metabolisable energy, the apparent metabolisable energy, the ileal digestible energy, the digestible amino acid content, and the ileal digestible amino acid content. The feed supplement may be an enzyme which enhances the digestibility of the amino acid or any other feedstuff or additive known to improve digestibility and/or improve homogeneity including but not limited to vitamins, growth promoters and probiotics.

The analysis of the cost of feedstuff may take into account both the cost of the feed supplement and the value or price of the feedstuff after supplementation.

The amount of feed supplement to be added may be determined by measuring the nutritional value of the feedstuff before addition of the feed supplement (i.e. the ingredient/raw material). Where the nutritional value is the quantity of digestible amino acid, this quantity may be measured by near infrared spectroscopy (NIRS).

The amount of feed supplement to be added can be varied in a progressive way, or alternatively a substantially constant amount of supplement can either be added or not added depending on whether the nutritional value of the raw material is above or below a threshold. If the nutritional value of the raw material is below a threshold then the supplement is added. If the nutritional value is above the threshold, no addition is made.

The invention can be embodied in a computer program which can be used to formulate the animal feed and may also control the manufacture of the animal feedstuff. Thus, the invention extends to a computer readable storage medium carrying such a computer program, to a computer system programmed with such a program, and to an animal feed manufacturing system incorporating the invention.

The invention will be further described by way of example only with reference to the accompanying drawings in which:-
Figure 1 illustrates an example of the reduction in the variability of digestible nutrient composition by adding enzymes to a feed;
Figure 2 is a flow diagram illustrating an embodiment of the present invention;
Figure 3 illustrates the relationship between the digestibility of the feed and the value of adding an enzyme in an embodiment of the invention; and
Figure 4 illustrates the decision process in the manufacture of the feed according to an embodiment of the invention.

The invention will be illustrated by the discussion of an embodiment relating to feed for poultry, and in particular the improvement of digestibility of such feed by the addition of an enzyme.

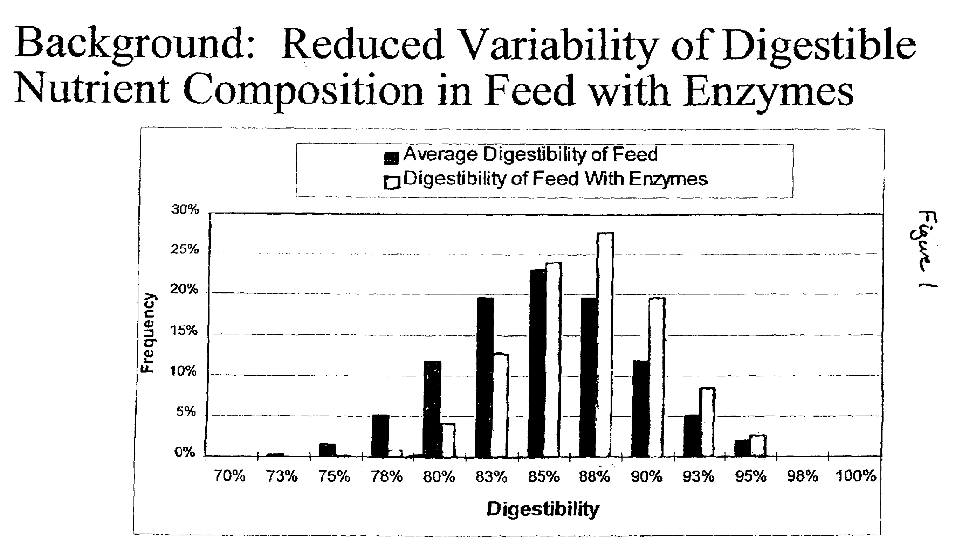

Enzymes improve the digestible proportion of feed by many mechanisms depending on the enzyme variety and the type of feed ration to which it is applied. The total amount of nutrient in the feed, however, does not change, and this creates an upper bound on the digestibility of a particular batch of feed. Figure 1 is a histogram which illustrates a normal distribution for the average digestibility of batches of feed (without any enzyme) and feed after the addition of enzymes. In fact the distribution for feed batches in reality need not be normal. The digestibility of a feedstuff can be defined in different ways, but a typical way is the amount of digestible amino acid present in the feed. Clearly the amount of digestible amino acid cannot exceed the total amount of the amino acid present, and in fact the maximum digestible amount is somewhat below 100% of the total amount. This is why, even if enzymes are added to feedstuff to increase the amount of digestible amino acid, there is an upper bound on the digestibility. As illustrated in Figure 1, therefore, when enzyme is added to all of the batches, the distribution of digestibility increases in average value, but also decreases in breadth. This results in a diet that is more consistent from batch to batch in digestible nutrient composition. The effect of improving the consistency in this way is to reduce the variability in the physiological response on the animals fed with the feedstuff. Thus, this can improve the homogeneity in the performance of the animals. For instance, in a typical poultry feed the average digestibility may be 85% and the coefficient of variation 5%. The application of enzymes increases the average digestibility to 87%, and reduces the coefficient of variation to 4% (a 20% improvement in the coefficient of variation). This improves the profitability of the flock and a value can therefore be placed on the increase in homogeneity deriving from the improved animal feed. This, therefore, has an influence on the value of the improved feed, i.e. the price the farmer is prepared to pay.

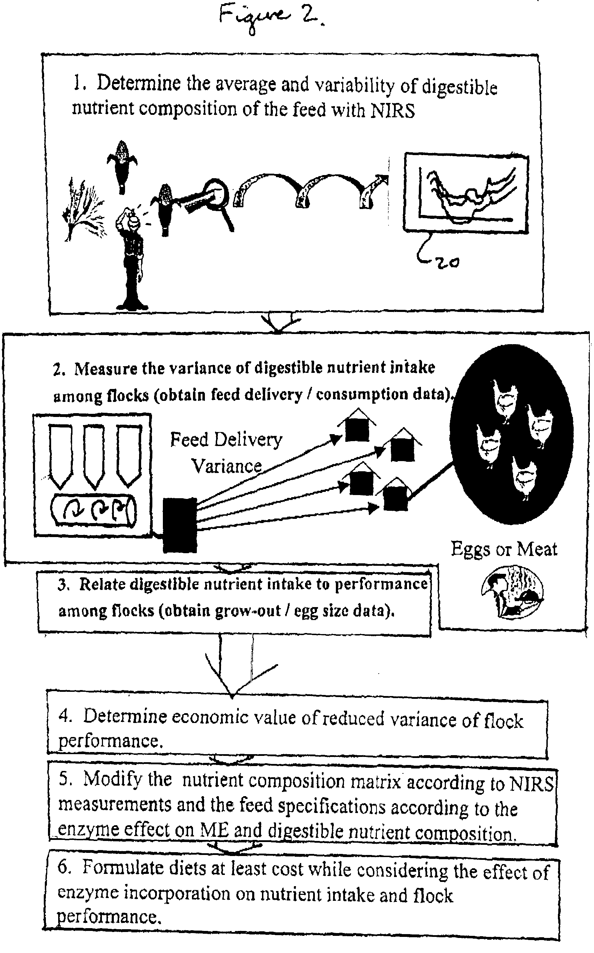

When the variation in the digestibility is reduced by incorporating enzymes in the feedstuff, most of the benefit comes from adding the supplement to batches of raw material whose digestibility is on the low end of the distribution. Thus, by analysing the variation in nutritional value of the raw materials and knowing the cost of the supplement, the best way of supplementing them, to produce the more homogeneous feed at a cost less than the price the farmer is prepared to pay, can be determined. This technique is exploited in the feed formulation and manufacturing process of the invention in the manner illustrated in Figure 2.

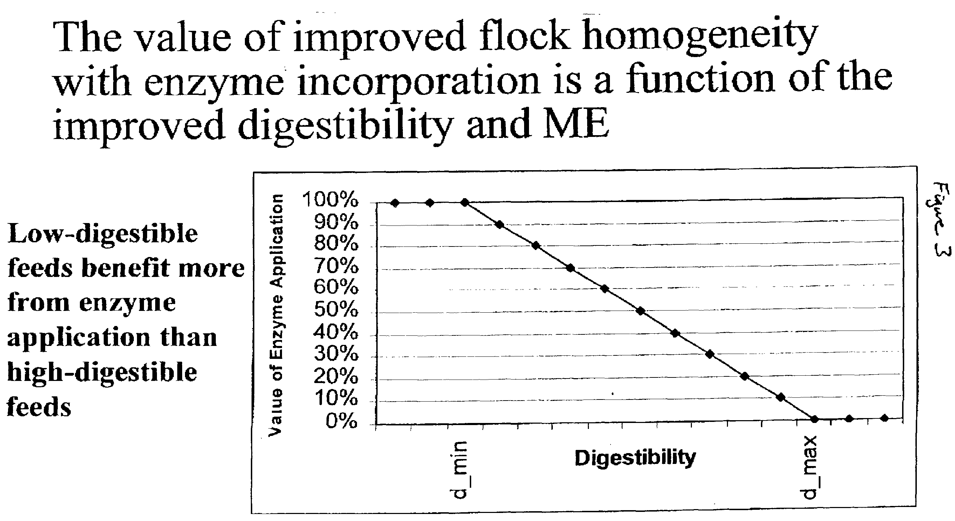

Firstly, the average and variability of the digestible nutrient composition in the ingredient(s) is detected, for instance by NIRS 20 at Step 1. Then in Steps 2 and 3 the variance of digestible nutrient intake among the flocks, and the effect of that variance on the performance of the flock is analysed. This is followed in Step 4 by a determination of the economic value of reduced variance of flock performance. Then the relationship between the digestibility of feed ingredients and/or rations and the effect of a particular enzyme of that digestibility is determined. An example relationship is illustrated in Figure 3 which plots the digestibility of batches of the raw material against the value of adding enzyme expressed as a percentage: 0% being no value obtained by adding enzyme and 100% being maximum value obtained. As illustrated in Figure 3 typically there is a maximum value of digestibility above which there is no benefit in adding enzymes. For instance, very high quality raw materials may have a naturally high digestibility and there is no benefit to be obtained in adding enzymes to them. Typically there also is a minimum value of digestibility dₘᵢₙ, below which the effect of adding enzymes is high, but constant. Figure 3 illustrates a simple linear relationship in the region between dₘᵢₙ and dₘₐₓ, though the function may be non-linear.

Between the values of dₘᵢₙ and dₘₐₓ a threshold can be set, d∗, which is the value of digestibility below which the value of enzyme application is greater than the cost of applying the enzyme. In other words, for batches of raw material which have a digestibility close to dₘₐₓ, the cost of applying the enzyme will be greater than the value of the improved feedstuff. However, for batches of raw material which have a digestibility between d∗ and dₘᵢₙ the cost of adding the enzyme will be less than the increased value.

Thus, in Figure 2 Step 5 involves the calculation of d∗ and Step 6 involves the formulation of the animal feed in accordance with the digestibility of the raw material and the value of d∗.

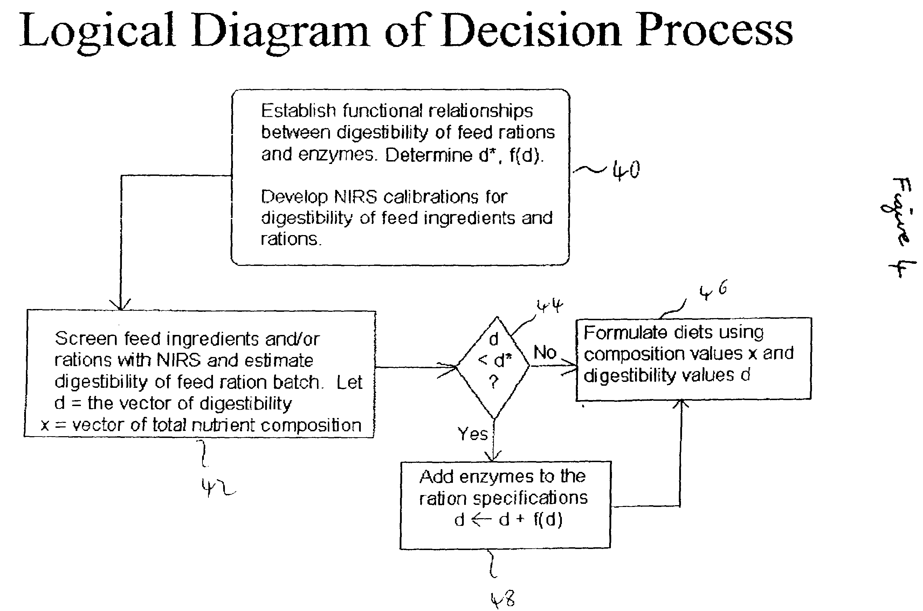

Figure 4 illustrates the overall decision process. Step 40 involves the determination of the functional relationship and determination of d∗, and also the development of the NIRS calibration which allows the measurement of digestibility of the incoming raw materials. In Step 42 the feed ingredients are screened by NIRS and the digestibility of each feed ration batch is estimated. The value of digestibility for each batch is compared to the threshold d∗ in Step 44, and if it is greater than the threshold then the raw material is used without supplement to formulate the animal feed in Step 46. If, however, the value of digestibility is lower than the threshold d*, then enzyme is added in Step 48 to increase the digestibility. The supplemented raw materials are then used to formulate the animal feed.

It should be noted that the nutritional value of the raw material may be measured in other ways, and the amount of other nutrients, rather than the digestibility, can be measured. For example, the digestible portion of dietary energy, called metabolisable energy (ME) may be measured using an in-vitro method. The invention is also applicable to the supplementation of raw materials with other feed supplements, that effect animal performance. Furthermore, although the example above relates to the measurement of one parameter and the addition of one supplement, in a given feedstuff it is possible to measure more than one parameter, each being enhanceable by the same or a different additive.

## Claims

1. A method of formulating an animal feed comprising the steps of:
(a) analysing the effect of variation in nutritional value of an animal feedstuff on the homogeneity of the physiological response of animals fed with the feedstuff;
(b) analysing the effect on the variation in nutritional value of the addition of a feed supplement;
(c) analysing the effect on the cost of the feedstuff of the addition of the feed supplement; and
(d) determining the amount of feed supplement to be added to the feedstuff on the basis of the effect on said homogeneity, of said variation in nutritional value, and of the cost of the feedstuff.

2. A method according to claim 1 wherein the step of analysing the effect of addition of the feed supplement on the homogeneity of the physiological response comprises:
analysing the relationship between the digestibility of a nutritional component of the animal feedstuff and the homogeneity of the physiological response of animals fed with the feedstuff; and
analysing the effect on the digestibility of the nutritional component of the feed supplement.

3. A method according to claim 2 wherein the nutritional component is an amino acid.

4. A method according to claim 2 wherein the digestibility is measured as one of: the true metabolizable energy, the apparent metabolizable energy, the ileal digestible energy, the digestible amino acid content and the ileal digestible amino acid content.

5. A method according to claim 2, 3 or 4 wherein the feed supplement is an enzyme which enhances the digestibility of an amino acid in the feedstuff.

6. A method according to claim 1 wherein the feed supplement is a feed additive that improves digestibility of the feed and/or animal performance and is selected from vitamins, supplemental amino acids, growth promoters and probiotics.

7. A method according to any one of the preceding claims wherein the analysis of the effect on the cost of the feedstuff takes into account the cost of the feed supplement.

8. A method according to any one of the preceding claims wherein the analysis of the effect on the cost of the feedstuff takes into account the value of the feedstuff supplemented by the feed supplement.

9. A method according to any one of the preceding claims wherein the step of determining the amount of feed supplement to be added comprises the step of determining the nutritional value of the feedstuff before addition of the feed supplement.

10. A method according to claim 9 wherein the step of determining the nutritional value of the feedstuff comprises measuring the digestibility of a component of the feedstuff by NIRS.

11. A method according to claim 9 or 10 wherein the step of determining the amount of feed supplement to be added comprises the step of setting a threshold for the nutritional value of the feedstuff before addition of the feed supplement, below which the feed supplement is to be added and above which the feed supplement is not to be added.

12. A method according to claim 9 or 10 wherein the step of determining the amount of feed supplement to be added comprises preferentially supplementing low nutritional value feedstuff.

13. A method according to any one of the preceding claims further comprising the step, in accordance with the result of the determination, of selectively adding the feed supplement.

14. A method according to any one of the preceding claims wherein the physiological response is the quality, quantity or consistency in the product or growth of the animals.

15. A method according to claim 14 wherein the product is eggs, milk or wool.

16. A method of manufacturing an animal feedstuff which includes the step of formulating the feedstuff according to the method of any one of the preceding claims.

17. An animal feedstuff manufactured according to the method of claim 16.

18. A computer program comprising program code means for controlling a computer system to execute or control the steps of any one of the preceding claims.

19. A computer readable storage medium carrying a computer program in accordance with claim 18.

20. A system for the manufacture of animal feedstuffs by supplementing raw material with feed supplement comprising:
a data processor programmed to: analyse the effect of variation in the nutritional value of the raw material on the homogeneity of the physiological response of animals fed with the feedstuff; to analyse the effect on the variation in nutritional value of the raw material of the addition of a feed supplement thereto; to analyse the effect on the cost of the feedstuff of the addition of the feed supplement, and to determine the amount of feed supplement to be added to the feedstuff on the basis of the effect on said homogeneity, of said variation in nutritional value, and of the cost of the feedstuff; and
a feed supplement supply device for selectively adding the feed supplement to the raw material in the determined amount.

21. A system according to claim 20 wherein the feed supplement is one of: an enzyme which enhances the digestibility of an amino acid in the feedstuff; a growth promoter; and a probiotic.

22. A system according to claim 20 or 21 further comprising an analysis device for determining the nutritional value of the raw material.

23. A system according to claim 22 wherein the analysis device is an NIR spectrometer.
